Europäisches Patentamt

European Patent Office

Office européen des brevets

(19)

(11) Veröffentlichungsnummer: **0 249 110 B1**

# (12) EUROPÄISCHE PATENTSCHRIFT

(45) Veröffentlichungstag der Patentschrift:
02.05.91 Patentblatt 91/18

(51) Int. Cl.$^5$: **G01V 3/10**

(21) Anmeldenummer: **87107842.4**

(22) Anmeldetag: **29.05.87**

(54) **Sonde für ein Metallsuchgerät.**

(30) Priorität: **07.06.86 DE 3619308**

(43) Veröffentlichungstag der Anmeldung:
**16.12.87 Patentblatt 87/51**

(45) Bekanntmachung des Hinweises auf die
Patenterteilung:
**02.05.91 Patentblatt 91/18**

(84) Benannte Vertragsstaaten:
**AT BE CH DE ES FR GB GR IT LI LU NL SE**

(56) Entgegenhaltungen:
**EP-A- 0 130 940**
**FR-A- 960 966**
**GB-A- 1 187 458**
**US-A- 3 882 374**

(73) Patentinhaber: **Ebinger, Klaus**
**Hansestrasse 13**
**W-5000 Köln 90 (Porz) (DE)**

(72) Erfinder: **Ebinger, Klaus**
**Hansestrasse 13**
**W-5000 Köln 90 (Porz) (DE)**

(74) Vertreter: **Berkenfeld, Helmut, Dipl.-Ing.**
**An der Schanz 2**
**W-5000 Köln 60 (DE)**

## Beschreibung

Die Erfindung betrifft eine Sonde für ein Metallsuchgerät mit einem tellerförmigen Gehäuse, mit einer in diesem angeordneten Sendespule und mit mindestens zwei in diesem angeordneten, elektrisch gegeneinandergeschalteten und im wesentlichen in der gleichen Ebene wie die Sendespule liegenden Empfängerspulen.

Metallsuchgeräte, mit denen der Erdboden oder sonstige nichtmetalle Medien untersucht werden, bestehen im wesentlichen aus einer teller- oder ringförmigen Sonde, die eine oder mehrere Suchspulen aufnimmt, sowie einer Geräteelektronik mit Stromversorgung, welche bei Auftreten von Metall akustische oder optische Anzeigesignale erzeugt. Die Suchspule besteht aus Sende- und Empfängerspulen. Diese können auch zu einer Spule zusammengefaßt sein. Die Wirkungsweise derartiger Geräte besteht darin, daß von der Sonde ein elektromagnetisches Wechselfeld oder auch kurze Impulse ausgesandt werden, die in den metallenen Suchobjekten Wirbelströme induzieren. Diese Wirbelströme bewirken ein Sekundärfeld, welches als magnetisches Echo bzw. Ortungssignal auf die Sonde zurückwirkt.

Einfache Metallsuchgeräte sind als sogenannte Relativmesser ausgebildet. Sie zeigen nur die relative Leitfähigkeitsänderung des untersuchten Mediums an. Ihr wesentlicher Nachteil liegt darin, daß bestimmte zu untersuchende Medien, wie zum Beispiel stark mineralisierter Erdboden, magnetische Straßenbeläge oder Salzwasser, erhebliche Störsignale auslösen können.

Hier helfen sogenannte Differenzmesser. Bodenmagnetische Effekte, störende Leitfähigkeit sowie Wechselfeldeinflüsse können durch eine Differenzmesser in weiten Grenzen ausgeblendet werden. Das Prinzip besteht darin, daß im Wirkungsfeld einer Sendespule liegende Empfängerspulen elektrisch gegeneinandergeschaltet und symmetrisch zur Sendespule angeordnet sind. Dadurch werden sender- und empfängerseitige Vorgänge entkoppelt. Ist der störende Untergrund in sich homogen, ist die elektrische Differenz zwischen den Empfängerspulen Null. Es gibt kein Störsignal. Auch die Wirkung störender Wechselfelder, wie sie zum Beispiel von Starkstromleitungen ausgehen, hebt sich in den Empfängerspulen auf.

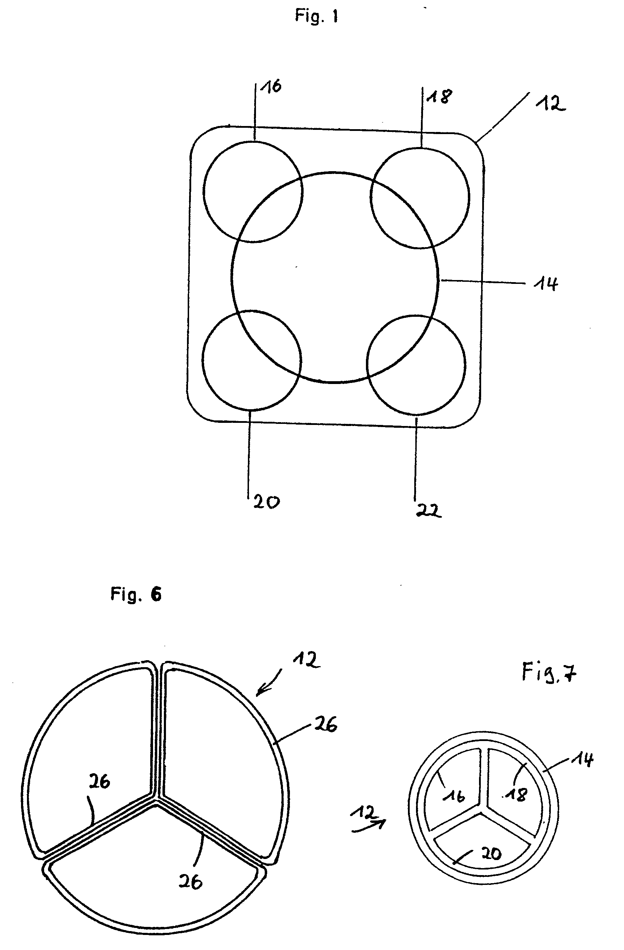

Das Prinzip der Differenzmessung ist auch bei Metallsuchgeräten bereits bekannt. Es gibt Minensuchgeräte amerikanischer oder französischer Bauart, bei denen um eine Sendespule vier gegeneinandergeschaltete Empfängerspulen angeordnet sind. Eine Sonde für ein solches Metallsuchgerät ist in Fig. 1 schematisch dargestellt. Auf oder über der Sendespule liegen die durch ihre geometrische Anordnung entkoppelten Empfängerspulen. Elektrisch sind sie so geschaltet, daß sich die in ihnen induzierten Restspannungen aufheben. Die Spulen liegen in einem tellerartigen Gehäuse von Rechteckform. Eine Bodenplatte nimmt die Sendespule in einer Vertiefung auf. Die vier Empfängerspulen liegen in Vertiefungen eines Gehäusedeckels. Diese Sonde hat eine große Fläche und ein hohes Gewicht. Sie ist unhandlich. Wegen ihrer großen Oberfläche ist sie thermischen Einflüssen stark ausgesetzt. Dies bedingt elektrische Instabilitäten. Diesem Nachteil versucht man durch taschenartige Umhüllungen aus wärmeisolierendem Material zu begegnen. Die Herstellung einer derartigen Sonde ist aufwendig, umständlich und damit auch teuer. Beim praktischen Einsatz hat diese Sonde nicht nur Gewichtsnachteile, einen hohen Wasserwiderstand bei schnellem Suchen, wie zum Beispiel in flachen Tümpeln, sondern auch eine geringe Lokalisierungsschärfe bei der Ortung mit dem Sondenrand (Suchen mit vertikal verkippter Sonde). Die Anordnung der Spulen bei einem solchen als Differenzmesser ausgebildeten Metallsuchgerät wird auch in der FR-A-960 966 beschrieben. Es werden eine Sendespule und zwei Empfängerspulen gezeigt, die in der gleichen Ebene wie die erstere und innerhalb dieser liegen. Die beiden Empfängerspulen sind gegeneinandergeschaltet. Ein Gehäuse und/oder die mechanische Anordnung der Spulen in einem Gehäuse werden nicht gezeigt.

Von diesem Stand der Technik ausgehend liegt der Erfindung die Aufgabe zugrunde, eine Sonde für ein als Differenzmesser ausgebildetes Metallsuchgerät so auszubilden, daß sie leicht und handlich, in der Ortung genau und in der Herstellung kostengünstig ist. Bei einer Sonde der eingangs genannten Gattung ergibt sich die Lösung für diese Aufgabe nach der Erfindung dadurch daß das Gehäuse durch mindestens einen Steg mit Mulden einschließenden Flanschen in mehrere Abschnitte unterteilt ist und die Empfängerspulen in diesen angeordnet sind. Bei den eingangs genannten Metallsuchgeräten amerikanischer oder französischer Bauart waren die Spulen in einem tellerartigen Gehäuse von Rechteckform in Vertiefungen einer Bodenplatte und eines Gehäusedeckels angeordnet. Erfindungsgemäß wird das Gehäuse durch Stege in mehrere Abschnitte unterteilt. zwischen diesen Stegen befindet sich sozusagen nur Luft. Dadurch wird das Gehäuse wesentlich leichter als das Gehäuse der genannten Minensuchgeräte amerikanischer oder französischer Bauart, bei denen die Bodenplatte und der Gehäusedeckel die gesamte Fläche des Gehäuses einnehmen und damit auch dort vorhanden sind, wo sie zur Fixierung der Spulen nicht benötigt werden. Erfindungsgemäß liegen die Spulen in den Mulden zwischen den Flanschen und werden durch diese in ihrer Lage fixiert. Dadurch ergibt sich auch eine enge, genaue und gleichbleibende elektrische Kopplung zwischen den Spulen. Hinzu kommt, daß das Gehäuse insgesamt leichter wird. Dieses Gehäuse läßt sich auch, wenn es am Ende einer Stange befestigt und an dieser beim Suchbetrieb über dem Boden bewegt wird, leicht handhaben und in jede Stellung bringen, in der der zu ortende Gegenstand genau lokalisiert werden kann. Wegen seiner geringen Oberfläche ist das Gehäuse thermisch stabil. Damit entfallen die bisher notwendigen Umhüllungen der Spulen aus wärmeisolierendem Material. Damit läßt sich daher Gehäuse kostengünstig herstellen. Infolge der schon genannten engen Kopplung der Spulen ergibt sich eine hohe Nachweisempfindlichkeit. Auch kleine Metallgegenstände können mit dem Sondenrand scharf lokalisiert werden. Bei der Unterwassuche läßt sich das Gehäuse wegen seiner geringen Oberfläche einfach hin- und herbewegen. Auch die Herstellung von Gehäusen mit einer unterschiedlichen Zahl von Stegen ist einfach. Das für die Herstellung der Stege verwandte Spritzwerkzeug lädt sich einfach umgestalten.

Der Steg kann symmetrisch durch die Mitte des Gehäuses verlaufen oder auch in einem Abstand von und parallel zur Mittellinie des Gehäuses durch dieses durchtreten. Dadurch werden die Empfängerspulen unterschiedlich groß und erhalten unterschiedliche Induktivitäten. Dies kann elektrisch ausgeglichen werden.

Im allgemeinen wird das Gehäuse durch einen Steg in zwei Abschnitte unterteilt. Dies bedeutet, daß zwei Empfängerspulen in einer Senderspule angeordnet sind. Das Gehäuse kann aber auch durch zwei sich unter 90° schneidende Stege in vier Abschnitte oder durch drei sich unter 120° schneidende Stege in drei Abschnitte unterteilt sein. In diesen Fällen werden yier oder drei Empfängerspulen innerhalb einer Senderspule angeordnet.

Vorteilhaft weisen der Steg bzw. die Stege im Querschnitt U-Profil auf, wobei der Steg des U-Profils auf dem Boden des Gehäuses aufliegt oder integral mit diesem ausgebildet ist, während die Flansche hochstehen und die Spulen um die Flansche gelegt sind.

Dabei verläuft ein Steg entlang des Umfanges des Gehäuses, während die Flansche des oder der durch das Gehäuse verlaufenden Stege in den innenliegenden Flansch des entlang des Umfanges verlaufenden Steges übergehen, und die Spulen in die von den Flanschen sämtlicher Stege umschlossenen Mulden eingelegt sind. Dadurch werden die einzelnen Wicklungen der Spulen sicher gehalten.

Im Normalfall weist das Gehäuse Kreisform auf. Es kann jedoch auch Quadratform oder jede andere Form aufweisen.

Im Normalfall liegen die Empfängerspulen innerhalb der Senderspule. Die außenliegende Spule kann jedoch auch als Empfängerspule und die innenliegenden Spulen können als Senderspule geschaltet werden.

Für den Fachmann ist es ebenfalls verständlich, daß symmetrische Spulen im Sondengehäuse nicht zwingend notwendig sind, da die Kompensationswirkung der verschiedenen Suchspulen auch bei unterschiedlicher Größe elektrisch, also durch unterschiedliche Wicklungszahl herbeigeführt werden kann.

Es wurde ausgeführt, daß das Gehäuse durch drei Stege in drei kreissektorförmige Abschnitte unterteilt werden und in jedem Abschnitt eine Empfängerspule angeordnet werden kann. Eine dieser Spulen kann auch als Senderspule geschaltet werden, wobei die beiden anderen Spulen für eine Differenzmessung und Null-Kompensation gegeneinandergeschaltet werden.

Am Beispiel der in der Zeichnung gezeigten Ausführungsformen wird die Erfindung nun weiter beschrieben. In der Zeichnung ist :

Fig. 1 eine schematische Aufsicht auf einen Differenzmesser gemäß dem Stand der Technik,

Fig. 2 eine Aufsicht auf ein erfindungsgemäß ausgebildetes Gehäuse bei abgenommenem Deckel mit einem mittig durch das Gehäuse verlaufenden Steg,

Fig. 3 eine Aufsicht auf die in dieses Gehäuse eingelegte Sende- und die beiden eingelegten Empfängerspulen,

Fig. 4 eine Aufsicht auf ein erfindungsgemäß ausgebildetes Gehäuse mit zwei durch dieses durchlaufenden und sich unter 90° schneidenden Stegen,

Fig. 5 eine schematische Aufsicht auf die in das Gehäuse nach Fig. 4 eingelegte Sende- und die vier eingelegten Empfängerspulen,

Fig. 6 eine Aufsicht auf ein durch drei Stege in drei kreissektorförmige Abschnitte unterteiltes Gehäuse bei abgenommenem Deckel und

Fig. 7 eine schematische Aufsicht auf die in das Gehäuse nach Fig. 6 eingelegten Spulen.

Fig. 1 zeigt das Gehäuse 12 des bekannten Differenzmessers. Die Senderspule 14 liegt im Gehäuse 12. Vier Empfängerspulen 16, 18, 20 und 22 liegen über der Senderspule 14. Sie liegen in Ausnehmungen oder Vertiefungen im Gehäusedeckel.

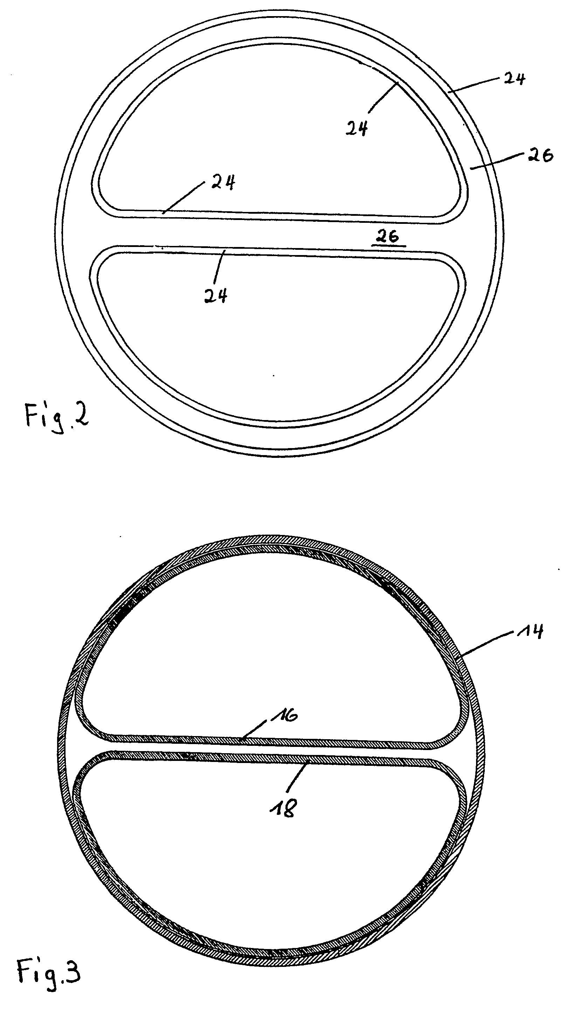

Fig. 2 zeigt das Gehäuse 12 einer erfindungsgemäß ausgebildeten Sonde. Ein Steg mit hochstehenden Flanschen 24 verläuft entlang der Mittellinie durch das Gehäuse 12. Ein weiterer Steg mit hochstehenden Flanschen 24 läuft entlang und parallel zum Umfang des Gehäuses. Die Flansche 24 gehen ineinander über und schließen Mulden 26 ein. Gemäß der Darstellung in Fig. 3 liegt die Senderspule 14 in der am Umfang des Gehäuses verlaufenden Mulde 26. Die beiden Empfängerspulen 16 und 18 liegen in den beiden anderen D-förmigen Mulden 26. Damit erhalten sie selbst auch D-Form.

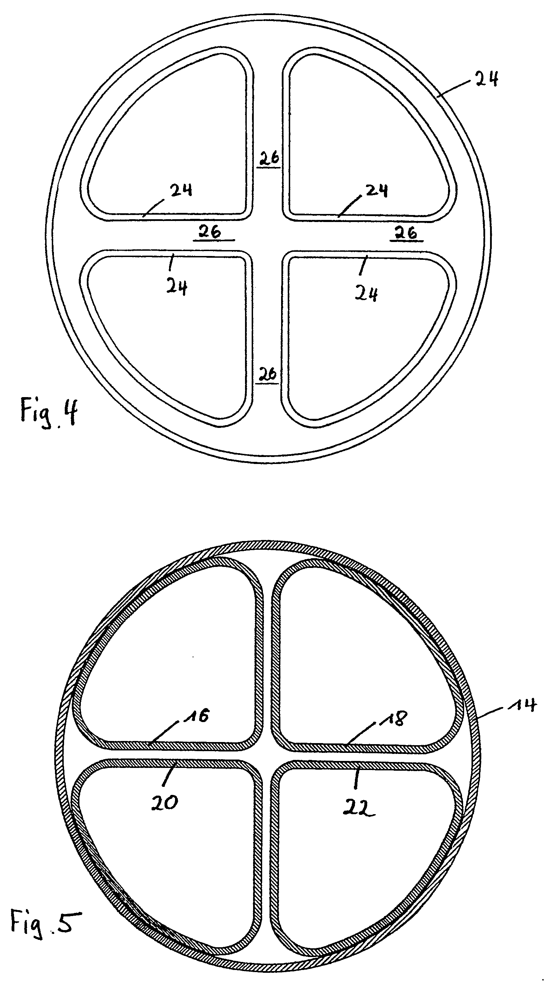

Bei der in Fig. 4 gezeigten Ausführungsform verlaufen zwei sich unter 90° schneidende Stege mit Flanschen 24 durch das Gehäuse. Wie bei der Ausführungsform nach Fig. 2 verläuft ein weiterer Steg mit Flanschen 24 entlang und parallel zum Umfang des Gehäuses. Die hochstehenden Flansche 24 dieser Stege gehen ineinander über. Dadurch entstehen vier kreissektorförmige Mulden 26. Gemäß der Darstellung in Fig. 5 liegt die Senderspule 14 in der am Umfang des Gehäuses verlaufenden Mulde 26. Die vier Empfängerspulen 16, 18, 20 und 22 liegen in den vier kreissektorförmigen Mulden 26.

Die Figuren 6 und 7 zeigen das gleiche Bild für ein durch drei Stege in drei Abschnitte unterteiltes Gehäuse 12. Wie ausgeführt, können hier drei Empfängerspulen 16, 18, 20 in einer Senderspule 14 liegen. Ebenso kann die in Kreisform gewickelte Senderspule 14 entfallen. Eine der in einem Kreissektor liegenden Spulen wird dann als Senderspule geschaltet.

Bei sämtlichen Ausführungsformen werden die Spulen in dem Gehäuse mit Kunstharz vergossen.

## Ansprüche

1. Sonde für ein Metallsuchgerät mit einem tellerförmigen Gehäuse (12), mit einer in diesem angeordneten Sendespule (14) und mit mindestens zwei in diesem angeordneten, elektrisch gegeneinander geschalteten und im wesentlichen in der gleichen Ebene wie die Sendespule (14) liegenden Empfängerspulen (16, 18), dadurch gekennzeichnet, daß das Gehäuse durch mindestens einen Steg mit Mulden (26) einschließenden Flanschen (24) in mehrere Abschnitte unterteilt ist und die Empfängerspulen (16, 18, 20, 22) in diesen angeordnet sind.

2. Sonde nach Anspruch 1, dadurch gekennzeichnet, daß der Steg symmetrisch durch die Mitte des Gehäuses (12) verläuft.

3. Sonde nach Anspruch 1, dadurch gekennzeichnet, daß der Steg in einem Abstand von und parallel zur Mittellinie des Gehäuses (12) durch dieses verläuft.

4. Sonde nach Anspruch 1, dadurch gekennzeichnet, daß das Gehäuse (12) durch zwei sich unter 90° schneidende Stege in vier Abschnitte unterteilt ist.

5. Sonde nach Anspruch 1, dadurch gekennzeichnet, daß das Gehäuse (12) durch drei sich unter 120° schneidende Stege in drei Abschnitte unterteilt ist.

6. Sonde nach einem der Ansprüche 1 bis 5, dadurch gekennzeichnet, daß der Steg bzw. die Stege im Querschnitt U-Profil aufweisen, der Steg des U-Profils auf dem Boden des Gehäuses (12) aufliegt, dessen Flansche (24) hochstehen, und die Spulen (14, 16, 18, 20, 22) um die Flansche (24) gelegt sind.

7. Sonde nach einem der Ansprüche 1 bis 6, dadurch gekennzeichnet, daß ein Steg entlang des Umfanges des Gehäuses (12) verläuft, die Flansche (24) des oder der durch das Gehäuse (12) verlaufenden Stege in den innenliegenden Flansch (24) des entlang des Umfanges verlaufenden Steges übergehen und die Spulen (14, 16, 18, 20, 22) in die von den Flanschen sämtlicher Stege umschlossenen Mulden (26) eingelegt sind.

8. Sonde nach einem der Ansprüche 1 bis 7, dadurch gekennzeichnet, daß das Gehäuse (12) Kreisform oder Quadratform hat.

9. Sonde nach einem der Ansprüche 1 bis 8, dadurch gekennzeichnet, daß Sende- und Empfängerspulen (14, 16, 18, 20, 22) elektrisch gegeneinander vertauscht sind.

## Claims

1. Sensor for a metal detector comprising a plate-like housing (12); a transmitting coil (14) arranged in the housing and at least two receiving coils (16, 18) which are arranged in the housing and which are electrically connected in opposite relationship and which are disposed substantially in the same plane as the transmitting coil (14) characterised in that the housing is divided into a plurality of portions by at least one limb with flanges (24) enclosing recesses (26), and the receiving coils (16, 18, 20, 22) are arranged in said portions.

2. Sensor according to claim 1 characterised in that the limb extends symmetrically through the centre of the housing (12).

3. Sensor according to claim 1 characterised in that the limb extends through the housing (12) at a spacing from and parallel to the centre line thereof.

4. Sensor according to claim 1 characterised in that the housing (12) is divided into four portions by two limbs which intersect at an angle of 90°.

5. Sensor according to claim 1 characterised in that the housing (12) is divided into three portions by three limbs which intersect at an angle of 120°.

6. Sensor according to one of claims 1 to 5 characterised in that the limb or limbs are of U-shaped profile in cross-section, the web of the U-shape lies on the bottom of the housing (12), the flanges (24) thereof are upstanding and the coils (14, 16, 18, 20, 22) are laid around the flanges (24).

7. Sensor according to one of claims 1 to 6 characterised in that a limb extends along the periphery of the housing (12), the flanges (24) of the limb or limbs extending through the housing (12) merge into the inwardly disposed flange (24) of the limb extending along the periphery and the coils (14, 16, 18, 20, 22) are fitted into the recesses (26) embraced by the flanges of all the limbs.

8. Sensor according to one of claims 1 to 7 characterised in that the housing (12) is of square or circular shape.

9. Sensor according to one of claims 1 to 8 characterised in that the transmitting and receiving coils (14, 16, 18, 20, 22) are electrically interchanged with each other.

## Revendications

1. Sonde pour un détecteur de métaux comportant un boîtier (12) en forme d'assiette, une bobine d'émission (14) disposée dans ce boîtier et au moins deux bobines de réception (16, 18) disposées dans ce boîtier, connectées électriquement dos à dos et situées essentiellement dans le même plan que la bobine d'émission (14), caractérisée en ce que le boîtier est subdivisé en plusieurs segments par au moins une nervure comportant des ailes (24) englobant des creux (26) et les bobines de réception (16, 18, 20, 22) sont disposées dans ces creux.

2. Sonde suivant la revendication 1, caractérisée en ce que la nervure passe symétriquement par le centre du boîtier (12).

3. Sonde suivant la revendication 1, caractérisée en ce que la nervure s'étend parallèlement à une certaine distance de la ligne médiane du boîtier (12), en travers de ce dernier.

4. Sonde suivant la revendication 1, caractérisée en ce que le boîtier (12) est subdivisé en quatre segments par deux nervures qui se coupent à 90°.

5. Sonde suivant la revendication 1, caractérisée en ce que le boîtier (12) est subdivisé en trois segments par trois nervures qui se coupent à 120°.

6. Sonde suivant l'une quelconque des revendications 1 à 5, caractérisée en ce que la ou les nervures présentent, en coupe transversale, un profil en U, l'âme du profil en U étant posée sur le fond du boîtier (12), ses ailes (24) se dressant vers le haut et les bobines (14, 16, 18, 20, 22) étant disposées autour des ailes (24).

7. Sonde suivant l'une quelconque des revendications 1 à 6, caractérisée en ce qu'une nervure s'étend le long de la périphérie du boîtier (12), les ailes (24) de la ou des nervures qui s'étendent en travers du boîtier (12) se fondent dans l'aile interne (24) de la nervure s'étendant le long de la périphérie et les bobines (14, 16, 18, 20, 22) sont insérées dans les creux (26) délimités par les ailes de toutes les nervures.

8. Sonde suivant l'une quelconque des revendications 1 à 7, caractérisée en ce que le boîtier (12) est de forme circulaire ou carrée.

9. Sonde suivant l'une quelconque des revendications 1 à 8, caractérisée en ce que les bobines d'émission et de réception (14, 16, 18, 20, 22) sont permutées électriquement.

Fig. 1

Fig. 6

Fig. 7

24

24

24

26

26

24

Fig.2

14

16

18

Fig.3

Fig. 4

Fig. 5